# EUROPÄISCHE PATENTSCHRIFT

(11) **EP 4 285 295 B1**
(45) Veröffentlichungstag und Bekanntmachung des Hinweises auf die Patenterteilung: **12.03.2025**
(21) Anmeldenummer: 22713267.7
(22) Anmeldetag: 20.01.2022
(51) Int. Cl.: G06N 20/00, G06N 3/088

(54) **VERFAHREN ZUM SCHÄTZEN EINES FAHRZEUGPARAMETERS FÜR DEN BETRIEB EINES FAHRZEUGS**
METHOD FOR ESTIMATING A VEHICLE PARAMETER FOR THE OPERATION OF A VEHICLE
PROCÉDÉ D'ÉVALUATION D'UN PARAMÈTRE DE VÉHICULE POUR LE FONCTIONNEMENT D'UN VÉHICULE

(30) Priorität: 01.02.2021 DE 102021200889
(43) Veröffentlichungstag der Anmeldung: 06.12.2023
(73) Patentinhaber: VOLKSWAGEN AKTIENGESELLSCHAFT, 38440 Wolfsburg (DE)
(72) Erfinder: KASTE, Jonas, 31061 Alfeld (Leine) (DE); KABIL, Sevsel Gamze, 38102 Braunschweig (DE); TEMPLER, Maximilian, 38122 Braunschweig (DE)
(86) Internationale Anmeldenummer: PCT/EP2022/051214
(87) Internationale Veröffentlichungsnummer: WO 2022/161843

(56) Entgegenhaltungen:
- RIBEIRO ALEXANDRE M. ET AL: "Estimation of Tire-Road Friction for Road Vehicles: a Time Delay Neural Network Approach", 14 November 2019 (2019-11-14), arXiv.org, pages 1 - 13, XP055925882, Retrieved from the Internet <URL:https://arxiv.org/pdf/1908.00452.pdf> [retrieved on 20220530]
- FRANCOIS PORTET ET AL: "Reduction of Large Training Set by Guided Progressive Sampling: Application to Neonatal Intensive Care Data", IN INTELLIGENT DATA INTERNATIONAL WORKSHOP ON ANALYSIS IN MEDICINE AND PHARMACOLOGY (IDAMAP2007), 1 January 2007 (2007-01-01), pages 1 - 2, XP055710045
- GRZYWACZEWSKI ADAM: "Training AI for Self-Driving Vehicles: the Challenge of Scale | NVIDIA Technical Blog", 9 October 2017 (2017-10-09), pages 1 - 9, XP055925973, Retrieved from the Internet <URL:https://developer.nvidia.com/blog/training-self-driving-vehicles-challenge-scale/> [retrieved on 20220530]

## Beschreibung

Die Erfindung betrifft ein Verfahren und eine Vorrichtung zum Schätzen eines Fahrzeugparameters für den Betrieb eines Kraftfahrzeugs, insbesondere während des Fahrzeugbetriebs. Ferner wird ein Kraftfahrzeug mit einer solchen Vorrichtung beschrieben.

Das datengetriebene Schätzen beziehungsweise Bestimmen von Fahrzeugparametern für den Betrieb des Fahrzeugs, wie beispielsweise von Reifenparametern, soll mit einer möglichst hohen Genauigkeit erfolgen. Solche Fahrzeugparameter werden insbesondere als Dateneingabe für Fahrzeugassistenzsysteme für das automatisierte oder teilautomatisierte Fahren benötigt. Dadurch ergibt sich die Anforderung an ein hohes Maß an Genauigkeit und an Performanz, das heißt Präzision und Schnelligkeit der Bestimmung.

Die Schätzung von Fahrzeugparametern, welche den Zustand einer Fahrzeugkomponente kennzeichnen, kann datengetrieben mittels eines Algorithmus für maschinelles Lernen, insbesondere eines künstlichen neuronalen Netzwerks, erfolgen. Dazu benötigt das neuronale Netzwerk dafür präparierte Trainingsdatensätze, auf deren Basis die Parameterschätzung erfolgt. Die Zusammenstellung dieser Trainingsdatensätze ist dabei bedeutsam für die Qualität und Schnelligkeit der Parameterbestimmung.

Nachteile beziehungsweise Insuffizienten beim Training maschineller Lernverfahren können dabei aufgrund eines suboptimal verteilten Trainingsdatensatzes hervorgerufen werden. Dadurch ergeben sich Performanzreduktionen durch sogenannte fehlende Fahrdatenpunkte, sogenannte corner cases beziehungsweise white spots.

Expertenwissen bei der Auswertung von Daten sowie subjektive Einflüsse bei der Zusammenstellung eines Trainingsdatensatzes für maschinelle Lernverfahren sind generell fehleranfällig, insbesondere bei mehrdimensionalen Problemen.

Schätzmethoden, insbesondere Online-Schätzmethoden, benötigen eine möglichst effiziente Repräsentation der vorliegenden Problemstellung, um einerseits schnelle Konvergenz zu erzielen, robust generalisieren zu können sowie auch eine Lösungsgüte zu erreichen. Hierzu sind unter anderem aus dem Stand der Technik subjektive Vorgaben sowie die Verteilung relevanter Szenarien auf Basis von Expertenwissen bekannt. Nachteilig ist dabei, dass die Nutzung großer Trainingsdatenmengen ohne Kenntnis der multidimensionalen Zusammenhänge der Szenarien erfolgt.

In einem hochdimensionalen Aktions- beziehungsweise Zustandsraum ist die Kombination sowie die Abhängigkeit unterschiedlicher Zustandsgrößen für menschliche Experten nur schwer zu erfassen. Eine gleichgewichtete Verteilung relevanter Szenarien ist kaum bereitzustellen und eine Auswertung erfolgt erst nach erfolgter Datengenerierung. Treten corner cases auf oder sind Datenpunkte beziehungsweise Szenarien unterrepräsentiert, so werden mehr Daten generiert und im Anschluss mehr Modelle trainiert und bewertet, was viel Zeit und Ressourcen kostet. Je komplexer eine Problemstellung, desto geringer sind die Aussichten auf gute Ergebnisse. Bei schwacher Konfidenz eines Klassifikators kann der Datensatz erweitert werden, die Analyse ist jedoch stark modellabhängig und eine allgemeine Schlussfolgerung über die Güte der Trainingsdaten kann nicht direkt abgeleitet werden.

In der US 2020/0142959 A1 werden für ein überwachtes (supervised) Training Datenpunkte mit einer Antriebsabsicht für die Klassifikation von Sprachäußerungen versehen. Insbesondere werden in dem Verfahren anomale Szenarien mit einer gegebenen Absicht mittels einer Rangfolge nach Anomalie-Scores erkannt und für diese eine Absicht bestimmt. Auf Basis eines Anomalie-Scores kann ein solches Szenario als positives Beispiel berücksichtigt werden. Ein Datensatz kann verwendet werden, um einen Absichts-Klassifikator zu trainieren oder neu zu trainieren.

Die US 2019/0019061 A1 zeigt ein Verfahren zur Erhöhung der Datenqualität eines Datensatzes speziell für halbüberwachtes (semi-supervised) maschinelles Lernen. Dabei erfolgt das Empfangen eines Datensatzes für maschinelles Lernen sowie von Klassenlabelinformationen für einen Teil dieser Daten. Das Verfahren beinhaltet das Bestimmen eines Datenbereinigungsfaktors und das Feststellen, ob der Datenreinheitsfaktor unter einer vorgegebene Sauberkeitsschwelle liegt, wobei in diesem Fall Daten ohne Klassenlabelinformationen Clustern zugeordnet werden. Ferner erfolgt das Bestimmen eines Zuordnungsmaßes für einen Datenpunkt in jedem Cluster und es erfolgt das Zuweisen der jeweiligen Clusterklassenbezeichnung zu dem Datenpunkt unter Konditionen.

Die CN111274976A offenbart ein Mehrspur-Detektionsverfahren für Vision und Laserradar zur Verbesserung der Genauigkeit der Spurerkennung, in dem Fall von komplizierten Straßenszenen.

In der Veröffentlichung Ribeiro Alexandre M. et al: "Estimation of Tire-Road Friction for Road Vehicles: a Time Delay Neural Network Approach", 14.11.2019, Seiten 1-13, arXiv.org, gefunden im Internet: URL:https://arxiv.org.pdf/1908.00452.pdf werden Reibungskoeffizienten mittels eines neuronalen Netzwerks auf Basis von geeigneten analytischen Modellen und Trainingsdaten ermittelt.

In der Veröffentlichung Francois Portet et. AI.: "Reduction of Large Training Set by Guided Progressive Sampling: Application to Neonatal Intensive Care Data", in Intelligent Data International Workshop on Analysis in Medicine and Pharmacology (IDAMAP2007), 1. Januar 2007, Seiten 1-2, bei der durch ein geführtes, progressives Sampling eine Datenreduzierung erfolgt, wobei ausgehend von einem ursprünglichen Datensatz ein Teildatensatz generiert wird, welcher dann mit einzelnen Datenpunkten des ursprünglichen Datensatzes angereichert wird.

Der Erfindung liegt die Aufgabe zugrunde, ein Verfahren zum Schätzen von Fahrzeugparametern zum Betrieb des Fahrzeugs bereitzustellen, welches eine hohe Präzision aufweist sowie ferner gezielt und sukzessive verbessert werden kann.

Gemäß der Erfindung ist ein computerimplementiertes Verfahren zum Schätzen eines Fahrzeugparameters zum Betrieb des Fahrzeugs gemäß Anspruch 1 bereitgestellt.

Ein Algorithmus zum maschinellen Lernen ist bevorzugt ein künstliches neuronales Netzwerk.

Die Schätzung des Fahrzeugparameters erfolgt datengetrieben, das heißt auf Basis einer Dateneingabe. Der erzeugte Trainingsdatensatz ist dabei insbesondere für nicht-überwachte, unsupervised, Lernverfahren bestimmt. Ein Zentrumspunkt ist mit anderen Worten ein Zentralpunkt beziehungsweise ein Zentrum oder auch ein Zentroid. Fahrdatenpunkte sind multidimensional und umfassen fahrdynamische Größen. Beispiele solcher Größen sind die longitudinale Beschleunigung, laterale Beschleunigung, Geschwindigkeit, Giergeschwindigkeit, Gierbeschleunigung, Lenkwinkel. Solche Fahrdaten können Information über den Fahrzeugzustand enthalten. Auf Basis des Trainingsdatensatzes beinhaltet insbesondere, dass der Algorithmus für maschinelles Lernen mittels des Trainingsdatensatzes trainiert worden ist und dadurch derart angepasst ist, dass er einen Fahrzeugparameter bestimmen kann. Schätzen bedeutet hierbei, dass datengetrieben mittels des Algorithmus ein solcher Fahrzeugparameter bestimmt wird. Ein Fahrzeugparameter ist dabei ein den Zustand einer Fahrzeugkomponente des Fahrzeugs beschreibender oder kennzeichnender Parameter. Ein Fahrzeugparameter ist ein Reifenparameter, welcher den Reifenzustand des Fahrzeugs beschreibt. Beispielsweise ist der Reifenparameter ein Formfaktor eines Pacejka-Modells. Die Formfaktoren können Steigung, Maximalwert und/oder Abknickverhalten kennzeichnen. Ein langsam veränderlicher Parameter ist beispielsweise ein Reifenverschleißparameter oder ein Bremsenverschleißparameter.

Die Erfindung hat den Vorteil, dass Fahrzeugparameter besser, das heißt schneller und präziser, geschätzt werden können. Dies wird dadurch erzielt, dass mittels des Abstands gezielt und cluster-basiert Fahrdatenpunkte mit hohen Abständen und daher hoher Ungewissheit dem Trainingsdatensatz hinzugefügt werden. Durch die dadurch erzielte bessere Repräsentation können Fahrzeugparameter mit höherer Lösungsgüte und zudem mit schnellerer Konvergenz ermittelt werden. Dies hat weiterhin den Vorteil, dass der Betrieb des Fahrzeugs, zum Beispiel eines Fahrassistenzsystems, ebenfalls auf Basis dieses genaueren Fahrzeugparameters verbessert werden kann. Für den Betrieb des Fahrzeugs ist die genaue Bestimmung von Fahrzeugparametern essentiell. Die Fahrzeugparameter werden zum Beispiel in die Regelstrategie und Bahnplanung zum automatisierten oder hochautomatisierten Fahren von Fahrassistenzsystemen verarbeitet, um eine sichere Fahrzeugführung zu garantieren. Dies ist notwendig, um Berechnungen für sicheres Abbremsen oder Umfahren von Objekten an den tatsächlichen Fahrzeugzustand anzugleichen und nicht von einem Optimum auszugehen. Um in Notfallsituationen Sicherheit zu gewährleisten, ist es zudem notwendig zu wissen, wieviel Kraft übertragen werden kann. Das Erstellen und die Erweiterung des Trainingsdatensatzes erfolgt ferner automatisch und benötigt kein Expertenwissen. Ferner wird kein nachgeführtes Modell zur Bewertung der verwendeten Fahrdaten benötigt. Zudem werden zeitliche und finanzielle Vorteile generiert. Die mittels des Abstands identifizierten white spots ermöglichen, eine punktuelle Erweiterung des Trainingsdatensatzes heranzuziehen.

Weitere bevorzugte Ausgestaltungen der Erfindung ergeben sich aus den übrigen, in den Unteransprüchen genannten Merkmalen.

In bevorzugter Ausführungsform ist der Abstandsschwellenwert abhängig vom jeweiligen Cluster. Dadurch kann lokal für jeden Cluster das Kriterium für das Hinzufügen von Fahrdatenpunkten festgelegt werden, wodurch die Cluster lokal optimiert werden können. Der Abstandsschwellenwert kann bevorzugt als Basis von Clustergröße und Anzahl der Fahrdatenpunkte im Cluster festgelegt werden.

In bevorzugter Ausführungsform umfasst das Verfahren das Verwenden von dem mindestens einen zusätzlichen Fahrdatenpunkt als Test- und/oder Validierungsdaten, wenn der Abstand des mindestens einen Fahrdatenpunkts zum Zentrumspunkt des zugeordneten Clusters kleiner als ein Abstandsschwellenwert ist. Da solche Fahrdatenpunkte für den jeweiligen Cluster keinen Mehrwert bringen, können diese Datenpunkte dennoch Verwendung finden, um den trainierten maschinen-lernenden Algorithmus zu testen und zu validieren. Durch die Nichtberücksichtigung gemäß dem Abstandskriterium wird die Konvergenz verbessert, da unnötige Redundanzen im Trainingsdatensatz vermieden werden.

In bevorzugter Ausführung des Verfahrens sind die initialen Fahrdatenpunkte erfasste Fahrdatenpunkte des Fahrzeugs bei Fahrzeugbetrieb. Ein solcher initialer Datensatz ist somit individuell auf das Fahrzeug, das heißt das Modell und auch die individuelle Fahrweise, angepasst. Ein solcher Fahrdatensatz, welcher schnell erfasst werden kann, eignet sich besonders für schnell veränderliche, das heißt zustandsabhängige Probleme. Beispielsweise können sich entsprechend dem Fahrzeugzustand und Untergrund die Fahrdaten schnell verändern und somit kann eine Schätzung zur Laufzeit, das heißt im Fahrzeugbetrieb, optimiert und angepasst werden.

In bevorzugter Ausführung des Verfahrens sind die initialen Fahrdatenpunkte fahrzeugextern gespeicherte Fahrdatenpunkte. Solche Fahrdatenpunkte können insbesondere Clouddaten sein, welche von einem Cloudserver bereitgestellt werden. Ein fahrzeugexterner Speicher, beispielsweise ein Cloudserver, kann eine kollektive Datenbasis sein, welche Fahrdatenpunkte von vielen verschiedenen Fahrzeugen zur Verfügung stellt. Eine solche Datenbasis eignet sich insbesondere für Fahrzeugparameter, welche sich nur gering mit der Laufzeit ändern. Hier dient beispielsweise die Schätzung eines Reifenverschleißparameters als Beispiel. Die initiale Datenbasis sollte hier entsprechend so groß wie möglich sein. Eine initiale Aufzeichnung während des Betriebs liefert in solchen Fällen eine weniger geeignete Datenbasis.

In einer bevorzugten Ausführungsform umfasst das Verfahren das iterative Erweitern des Trainingsdatensatzes durch n-faches, n≥1, Wiederholen der folgenden Schritte: Aufteilen der initialen Fahrdatenpunkte und der bis zur vorherigen Iteration hinzugefügten Fahrdatenpunkte in Cluster unter Verwendung des Cluster-Algorithmus; das Ermitteln eines Zentrumspunkts für jeden Cluster; das Erfassen von mindestens einem zusätzlichen Fahrdatenpunkt; das Zuordnen des mindestens einen Fahrdatenpunktes zu einem Cluster; das Erweitern des Trainingsdatensatzes der vorherigen Iteration mit dem mindestens einen erfassten Fahrdatenpunkt, wenn der Abstand des mindestens einen erfassten Fahrdatenpunktes von dem Zentrumspunkt des zugeordneten Clusters größer als ein Abstandsschwellenwert ist. Dadurch kann zur Laufzeit automatisiert ein sich selbstständig optimierender Trainingsdatensatz generiert werden. Der Trainingsdatensatz wird dabei sukzessive erweitert und dabei homogenisiert unter Elimination von white spots und corner cases. Dadurch kann auch die Bestimmung des Fahrzeugparameters zum Betrieb des Fahrzeugs sukzessive verbessert werden. Dies hat beispielsweise zur Folge, dass im Falle einer automatisierten oder teilautomatisierten Fahrassistenz eine genauere Regelung und Planung ermöglicht wird, da die Parameter den tatsächlichen Systemzustand beschreiben. Durch das Wiederholen wird sichergestellt, dass nach und nach alle Fahrzustände berücksichtigt sind und der Trainingsdatensatz homogenisiert wird.

Das Verfahren umfasst das Erfassen des mindestens einen zusätzlichen Fahrdatenpunktes während des Fahrzeugbetriebs. Dadurch kann während der Laufzeit der Trainingsdatensatz ergänzt werden. Die Fahrdatenpunkte sind zudem besonders geeignet, da diese Fahrdaten spezifisch sind für das Fahrzeugmodell beziehungsweise auch auf die Fahrweise. Dadurch sind fehlende Fahrzustände, welche in diesen Fahrdatenpunkten enthalten sind, besonders relevant.

In einer bevorzugten Ausführungsform der Erfindung umfasst das Verfahren das zeitkontinuierliche Erfassen des mindestens einen zusätzlichen Fahrdatenpunktes während des Fahrzeugbetriebs. Dadurch kann eine Echtzeitoptimierung während des Fahrbetriebs realisiert werden.

Ein weiterer Aspekt der Erfindung betrifft eine Vorrichtung für ein Fahrzeug zum Schätzen eines Fahrzeugparameters für den Betrieb eines Fahrzeugs, umfassend eine Prozessoreinheit, welche eingerichtet ist, das Verfahren nach den beschriebenen Ausführungen auszuführen. Eine solche Vorrichtung ist insbesondere eine Steuereinheit beziehungsweise Fahrzeugsteuerung, welche insbesondere im Fahrzeug integriert ist. Eine solche Steuereinheit kann Teil eines Fahrassistenzsystems sein, zum Beispiel für autonomes Fahren oder auch für teilautonomes Fahren. Die oben beschriebenen Vorteile beziehen sich ebenfalls auf eine solche Vorrichtung.

Ferner wird ein Verfahren zum Betrieb eines Kraftfahrzeugs beschrieben, welches das Verfahren zur Schätzung des Fahrzeugparameters umfasst, wobei der bestimmte Fahrzeugparameter als Eingangsparameter zum Betrieb des Fahrzeugs verwendet wird. Insbesondere kann hierbei eine Fahrzeugsteuerung, insbesondere eines Fahrassistenzsystems, auf Basis des bestimmten Fahrzeugparameters eine Planung beziehungsweise Regelung oder Warnung ausführen.

In einem weiteren Aspekt der Erfindung wird ein Kraftfahrzeug mit einer solchen Vorrichtung offenbart.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ablaufschema des Verfahrens gemäß einer Ausführungsform der Erfindung;
- Figur 2: eine schematische Darstellung einer Aufteilung von initialen Fahrdatenpunkten in Clustern gemäß einer Ausführungsform der Erfindung;
- Figur 3: eine schematische Darstellung einer Zuweisung von zusätzlichen Fahrdatenpunkten zu Clustern gemäß einer Ausführungsform der Erfindung;
- Figur 4: eine schematische Darstellung von ermittelten Abständen der Fahrdatenpunkte zu Zentrumspunkten gemäß einer Ausführungsform der Erfindung;
- Figuren: eine Darstellung einer Verteilung von Fahrdatenpunkten eines initialen
- 5a und 5b: Fahrdatensatzes und eines zusätzlichen Fahrdatensatzes;
- Figur 6: eine Distanzdarstellung der zusätzlichen Fahrdatenpunkte nach einer Ausführungsform der Erfindung;
- Figur 7: geschätzte Referenzfahrzeugparameter gemäß dem Stand der Technik; und
- Figuren 8a und 8b: geschätzte Fahrzeugparameter gemäß Ausführungsformen der Erfindung.

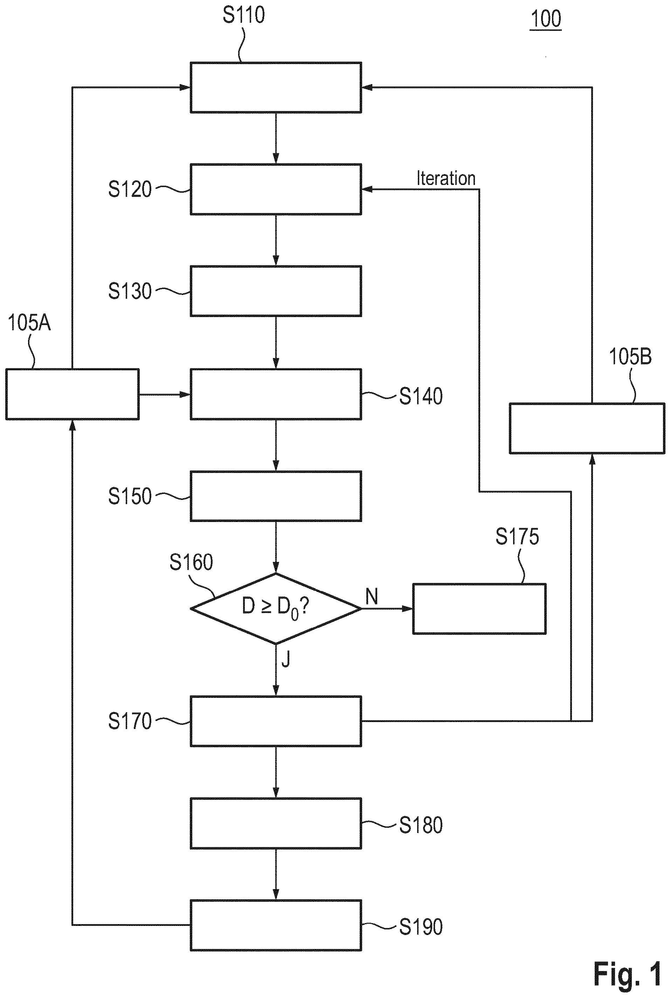

Figur 1 zeigt eine Ausführungsform eines Ablaufschemas des erfindungsgemäßen Verfahrens zum Schätzen eines Fahrzeugparameters, insbesondere eines Reifenparameters des Fahrzeugs, zum Betrieb des Fahrzeugs. Das Verfahren kann von einer Vorrichtung 100 mit einem Prozessor ausgeführt werden, wobei der Prozessor die einzelnen Verfahrensschritte ausführt.

In einem Schritt des Verfahrens erfolgt das Erhalten einer Vielzahl initialer Fahrdatenpunkte I1, I2 gemäß dem Schritt S110. Ein Fahrdatenpunkt ist dabei insbesondere ein multidimensionaler Vektor mit einer Vielzahl von Zustandsgrößen, insbesondere von fahrdynamischen Größen wie die longitudinale Beschleunigung, laterale Beschleunigung, Geschwindigkeit, Giergeschwindigkeit, Gierbeschleunigung, Lenkwinkel. Die Zustandsgrößen der Fahrdatenpunkte können insbesondere mit Sensoren des Fahrzeugs gemessen werden.

Die initialen Fahrdatenpunkte I1, I2 können erhaltene fahrzeugextern abgespeicherte Fahrdaten 105B sein, welche zum Beispiel von einem Cloudserver beziehungsweise einer Cloudserverstruktur bereitgestellt beziehungsweise übertragen werden. Dabei können sehr große Datenmengen durch einen kollektiven Datenspeicher vieler Fahrzeuge bereitgestellt werden. Alternativ oder auch in Kombination können die initialen Fahrdatenpunkte I1, I2 Fahrdatenpunkte des Fahrzeugs 105A sein. Solche Fahrdatenpunkte I1, I2 können initial während des Betriebs des Fahrzeugs erhalten werden, zum Beispiel durch geeignete Sensoren des Fahrzeugs. Eine solche Datenbasis ist vorteilhaft, wenn der zu schätzende Fahrzeugparameter sich schnell ändert und sensitiv ist auf fahrdynamische Zustandsänderungen ist, das heißt, dann kann eine geringe Datenbasis reichen, welche direkt im Fahrbetrieb ermittelt werden kann.

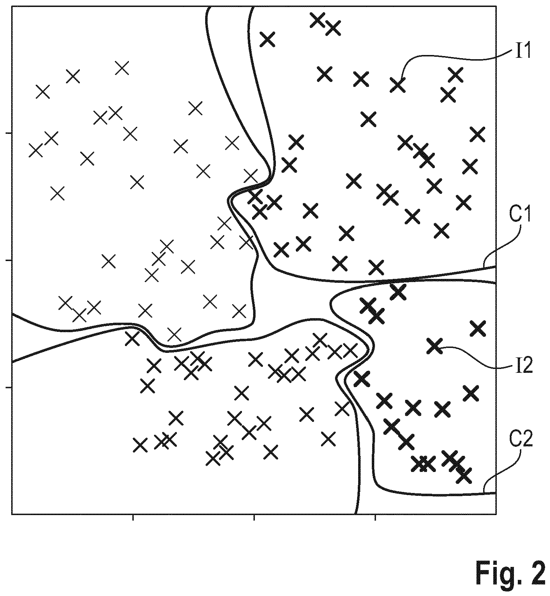

In einem Schritt des Verfahrens erfolgt das Aufteilen der initialen Fahrdatenpunkte I1, I2 in Cluster C1, C2 unter Verwendung eines Cluster-Algorithmus S120. Initiale Fahrdatenpunkte, welche ähnlich zueinander sind, werden somit zu einem Cluster C1, C2 gruppiert. Das Clustern kann dabei mittels typischer Verfahren wie zum Beispiel mittels k-means erfolgen, wobei auch andere Algorithmen verwendet werden können. Jeder initiale Fahrdatenpunkt I1, I2 wird dabei einem bestimmten Cluster C1, C2 zugeordnet. Eine Illustration einer rein beispielhaften Aufteilung von initialen Fahrdatenpunkten I1, I2 ist in Figur 2 dargestellt. Die Fahrdatenpunkte I1, I2 sind dabei als Kreuze in einer vereinfachten zweidimensionalen Projektion gezeigt. In typischen Beispielen ist jeder Fahrdatenpunkt I1, I2 ein multidimensionaler, zumeist hochdimensionaler, Vektor, so dass eine Projektion wie in Figur 2 lediglich der Veranschaulichung dient. Die initialen Fahrdatenpunkte I1, I2 sind hierbei beispielhaft in vier Cluster C1, C2 aufgeteilt, wobei auch typischerweise deutlich mehr Cluster vorgesehen sind, um verschiedene Fahrszenarien zu gruppieren.

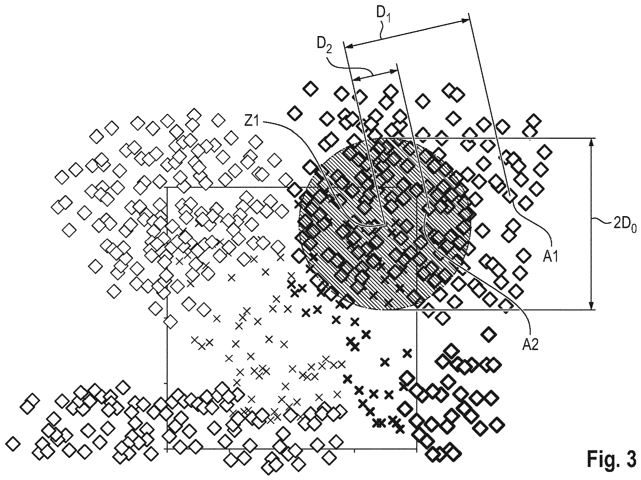

In einem weiteren Schritt des Verfahrens erfolgt das Ermitteln S130 eines Zentrumspunkts Z für jeden Cluster C. Ein Zentrumspunkt Z1 ist mit anderen Worten ein Zentroid, das heißt ein zentraler Punkt in einem mehrdimensionalen Zustandsraum, wenn die Fahrdatenpunkte I1, I2 mehrere messbare Zustandsgrößen als Einträge haben. Ein solcher Zentrumspunkt ist derjenige Punkt der Verteilung der Fahrdatenpunkte I1, I2, zu dem die Fahrdatenpunkte in Summe einen minimalen Abstand haben. Ein solcher Zentrumspunkt Z1 ist zur Illustration in der Figur 3 schematisch für den Cluster C1 gezeigt. Die Bestimmung der Zentrumspunkte Z1 beziehungsweise Zentroiden kann über Distanzsummen erfolgen. Beispielsweise kann initial eine zufällige Verteilung der Zentroiden in dem jeweiligen Cluster angenommen werden, wobei die Zahl der Zentroiden mit der Zahl der Cluster übereinstimmt. Dann kann mittels eines iterativen Minimierungsalgorithmus die Zentroidlage so angepasst werden, dass die Distanzen zu den Fahrdatenpunkten I1, I2 minimiert werden.

In einem weiteren Schritt S140 wird mindestens ein zusätzlicher Fahrdatenpunkt A1, A2 erfasst beziehungsweise erhalten. Ein zusätzlicher Fahrdatenpunkt A1, A2 hat dabei ebenfalls die Zustandsgrößen wie die initialen Fahrdatenpunkte I1, I2. Diese werden durch Sensoren des Fahrzeugs erfasst. Insbesondere wird eine Vielzahl, das heißt ein Datensample, an zusätzlichen Fahrdatenpunkten A1, A2 erfasst. Diese zusätzlichen Fahrdatenpunkte werden während des Fahrzeugbetriebs als Fahrdatenpunkte des Fahrzeugs 105A erfasst - S140. Dadurch sind die zusätzlichen Fahrdatenpunkte A1, A2 besonders repräsentativ für das verwendete Fahrzeugmodell, das heißt Fahrzeugtyp, und/oder das Fahrzeugverhalten auf Basis des Fahrzeugzustands. In der Figur 3 ist dazu beispielhaft eine Vielzahl von zusätzlichen Fahrdatenpunkten A1, A2 zur Illustration gezeigt, welche als Quadrate dargestellt sind.

In einem weiteren Schritt S150 erfolgt das Zuordnen der zusätzlichen Fahrdatenpunkte A1, A2 zu einem der zuvor bestimmten Cluster C1, C2. Dabei wird anhand jedes zusätzlichen Fahrdatenpunktes A1, A2 geprüft, zu welchem der Vielzahl der Cluster C1, C2 dieser Fahrdatenpunkt gehört beziehungsweise mit welchem der Cluster die Zustandsgrößen des Fahrdatenpunktes A1, A2 die größten Gemeinsamkeiten aufweisen. Die Zuweisung kann beispielsweise auf Basis der Abstände zu den Zentrumspunkten, das heißt zu allen Zentrumspunkten der verschiedenen Cluster, erfolgen. Beispielsweise kann demnach der zusätzliche Fahrdatenpunkt zu demjenigen Cluster mit geringstem Abstand zum Zentrumspunkt zugeordnet werden. Die Zuordnung ist in der Figur 3 anschaulich gezeigt, in welchem eine Vielzahl zusätzlicher Fahrdatenpunkte A1, A2 den jeweiligen Clustern zugeordnet sind, welche auf Basis der initialen Fahrdatenpunkte erzeugt wurden. In dem vorliegenden Fall sind die zusätzlichen Fahrdatenpunkte A1, A2 dem Cluster C1 zugeordnet.

In einem weiteren Schritt S160 wird ein Abstand D1, D2 des zusätzlichen Fahrdatenpunktes A1, A2 vom Zentrumspunkt Z1 des zugeordneten Clusters C1 mit einem Abstandsschwellenwert D₀ verglichen. Dadurch findet eine Evaluierung jedes zusätzlichen Fahrdatenpunktes A1, A2 statt. Die Bestimmung des Abstands D1, D2 kann dabei bereits zuvor beim Schritt des Zuweisens erfolgt sein. Der Abstand D1, D2 kann auch nach dem Zuordnen erfolgen. Der Abstand D1, D2 ist beispielhaft für die beiden ausgewählten Fahrdatenpunkte A1 und A2 in der Figur 3 gezeigt. Der Abstand D1, D2 ist dabei bevorzugt ein euklidischer Abstand.

Durch den Abstandsschwellenwert D₀ und den Abstandsvergleich können Fahrdatenpunkte gezielt evaluiert werden, das heißt, die zusätzlichen Fahrdatenpunkte A1, A2 können darin lokal beurteilt werden, ob diese einen Fahrzustand beschreiben, welcher von den bisherigen Fahrzuständen abweicht. Der Abstandsschwellenwert D₀ ist in dieser sehr vereinfachten Projektion der Figur 3 als Kreis dargestellt. Ein hoher Abstand D1, D2 gegenüber D₀ drückt ferner eine hohe Ungewissheit aus. Solche zusätzlichen Fahrdatenpunkte A1, welche außerhalb des Abstandsschwellenwerts D₀ liegen, stellen somit einen Mehrwert für den Trainingsdatensatz dar. Der Abstandsschwellenwert D₀ kann dabei bevorzugt abhängig vom jeweiligen Cluster festgelegt sein. Dadurch kann jedem Cluster eine individuelle Schwelle zugewiesen werden. Dieser Schwellenwert kann ferner abhängig von der Größe des Clusters und/oder der Anzahl der darin befindlichen Fahrdatenpunkte festgelegt werden.

In einem weiteren Schritt S170 erfolgt das Erweitern des Trainingsdatensatzes, welcher die initialen Fahrdatenpunkte I1, I2 umfasst, unter bestimmten Bedingungen. Der initiale Trainingsdatensatz besteht dabei bevorzugt aus den initialen Fahrdatenpunkten I1, I2. Der mindestens eine zusätzliche Fahrdatenpunkt A1, A2 wird dem Trainingsdatensatz hinzugefügt, wenn der Abstand D1 des mindestens einen zusätzlichen Fahrdatenpunktes A1 von dem Zentrumspunkt Z1 des zugeordneten Clusters C1, C2 größer ist als der Abstandsschwellenwert D₀. Wenn dieses Kriterium erfüllt ist, wird der Trainingsdatensatz mit dem zusätzlichen Fahrdatenpunkt erweitert. Mit anderen Worten erweitern Fahrdatenpunkte mit sehr hohen Abständen D1 zum Zentroid Z1 den Trainingsdatensatz. Der erweiterte Trainingsdatensatz, beziehungsweise der oder die erweiterte/n Cluster, wird somit homogenisiert. Sogenannte unerwünschte white spots oder corner cases im Trainingsdatensatz können somit eliminiert beziehungsweise zumindest verringert werden. Zudem erfolgt die Erweiterung selektiv durch das Abstandskriterium und ferner cluster-orientiert. Die Trainingsdaten können in einem Datenspeicher mit den zusätzlichen, als relevant evaluierten Fahrdatenpunkten abgespeichert werden.

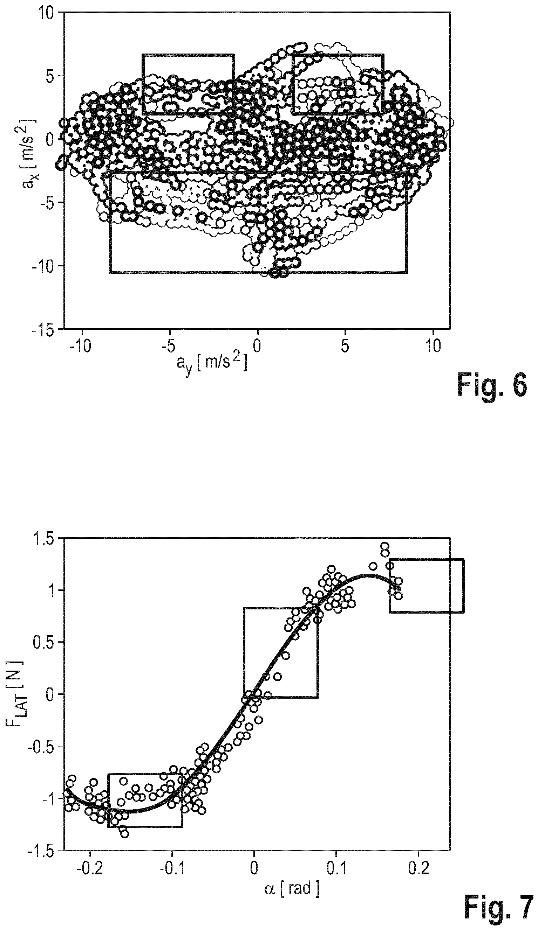

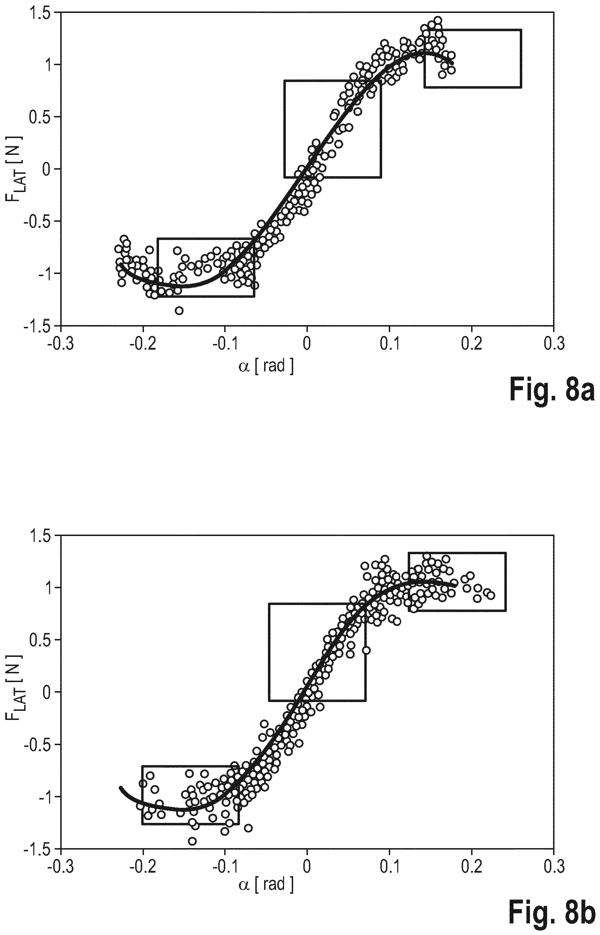

In einem weiteren Schritt S180 erfolgt das Schätzen eines Fahrzeugparameters zum Fahrzeugbetrieb auf Basis des erweiterten Trainingsdatensatzes. Dabei kommt ein Optimierer in Form eines Algorithmus zum maschinellen Lernen zum Einsatz, bevorzugt ein künstliches neuronales Netzwerk. Der erweiterte Trainingsdatensatz wird dabei zur Lernphase verwendet. Ein derartig trainierter Algorithmus kann dann auf Basis einer Dateneingabe einen Fahrzeugparameter schätzen. Ein Fahrzeugparameter beschreibt beziehungsweise kennzeichnet den Fahrzeugzustand einer Fahrzeugkomponente. Ein solcher Fahrzeugparameter ist dabei bevorzugt ein Reifenparameter, siehe dazu die Figuren 7, 8a und 8b, in welchen Reifenparameter bestimmt werden, welche das Kraftübertragungsverhalten in Querrichtung beschreiben. Die Reifenparameter können insbesondere die Formfaktoren der Pacejka-Kurve beispielsweise für Vorder- und/oder Hinterachse sein. Die Formfaktoren können Steigung, Maximalwert und/oder Abknickverhalten kennzeichnen. Diese Parameter sind typische Eingangsparameter für Fahrassistenzsysteme, insbesondere für Modelle, welche in Fahrassistenzsystemen verwendet werden, für automatisiertes oder halbautomatisiertes Fahren und werden von diesen verwendet. In einem weiteren bevorzugten Beispiel ist der Fahrzeugparameter eine Masse oder ein Bremsenverschleißparameter.

Soll ein globales Optimum gefunden werden für einen Fahrzeugparameter, welcher nur gering von den Zustandsgrößen abhängt und sich nur langsam ändert, so ist es zweckmäßig, die initialen Fahrdatenpunkte I1, I2 von den fahrzeugextern gespeicherten Clouddaten 105B zu entnehmen, insbesondere mit einer großen Datenbasis. Soll ein lokaler Zustand zum Beispiel Masse, Reifenzustand als Parameter bestimmt werden, so können die initialen Fahrdatenpunkte vom Fahrzeug als Fahrdatenpunkte des Fahrzeugs 105A erhalten werden und eine Optimierung aus während der Fahrt aufgezeichneten Zustandsgrößen erfolgen. Ein solcher initialer Datensatz ist somit individuell auf das Fahrzeug, das heißt auf das Modell und auch auf den Fahrzeugzustand, angepasst. Ein solcher Fahrdatensatz, welcher schnell erfasst werden kann, eignet sich besonders für zeitlich schnell veränderliche, das heißt zustandsabhängige, Probleme. Beispielsweise können sich entsprechend dem Fahrzeugzustand und Untergrund die Fahrdaten schnell verändern und somit kann eine Schätzung zur Laufzeit, das heißt im Fahrzeugbetrieb, optimiert und angepasst werden.

Der Fahrzeugparameter, insbesondere der bestimmte Reifenparameter, kann dann zu einer Fahrzeugsteuerung, beziehungsweise von einem Fahrassistenzsystem, verwendet werden S190. Die genauere und zeiteffiziente Bestimmung des Fahrzeugparameters hat somit auch zur Folge, dass die Fahrzeugassistenzsysteme verbessert werden. Dies kann einerseits darin bestehen, dass Fahrassistenzsysteme für automatisches oder teilautomatisches Fahren schnellere und genauere Eingangsparameter zur Verfügung gestellt bekommen. Diese beeinflussen direkt die Fahrzeugführung und entsprechend die zur Laufzeit erfassten Fahrdatenpunkte des Fahrzeugs 105A, was in der Figur als Rückkopplung gezeigt ist.

Die dem Trainingsdatensatz hinzugefügten Fahrdatenpunkte können ferner an einen externen Server, insbesondere ein Cloudserver, übermittelt werden. Dadurch kann der Fahrdatensatz der fahrzeugextern gespeicherten Fahrdaten 105B des externen Servers verbessert werden. Die zusätzlichen, als relevant eingestuften Fahrdatenpunkte können somit wieder als initiale Fahrdaten beispielsweise für andere Fahrzeuge zur Verfügung gestellt werden. Dadurch wird die fahrzeugextern gespeicherte Datenmenge qualitativ verbessert.

Wenn in Schritt S160 der Abstand D2 unterhalb des Abstandsschwellenwerts D₀ liegt, so stellen diese Fahrdatenpunkte A2 keinen Mehrwert dar. In einem solchen Fall kann dieser oder können diese zusätzlichen Fahrdatenpunkte A1, A2 als Test- und/oder Validierungsdaten verwendet werden S175. Redundanzen im Trainingsdatensatz werden dadurch vermieden und wirken an der optimalen Einstellung des neuronalen Netzwerks mit.

Das Verfahren kann ferner ein sukzessives, iteratives Erweitern des Trainingsdatensatzes umfassen, was eine besondere Ausführungsform der Erfindung ist. Dies wird durch die Verknüpfung von Schritt S170 zurück zu Schritt S120 in der Figur 1 offenbart. Das iteratives Erweitern kann, ausgehend von dem erstmaligen Erweitern des Trainingsdatensatz wie oben beschrieben, beliebig oft, das heißt n-fach, wiederholt werden, wobei n=1, 2, 3, 4, ...ist. In jeder Iterationsschleife können die Schritte S120 bis S170 neu durchlaufen werden, wie bereits oben beschrieben.

Ausdrücklich bedeutet dies, dass das Erzeugen eines Clusterdatensatzes S120 durch Aufteilen der initialen Fahrdatenpunkte und der bis zur vorherigen Iteration hinzugefügten Fahrdatenpunkte in Cluster unter Verwendung des Cluster-Algorithmus erfolgt. Die bis zur vorherigen Iteration hinzugefügten Fahrdatenpunkte sind dabei nicht nur die letztmalig hinzugefügten Fahrdatenpunkte, sondern die insgesamt zuvor hinzugefügten Fahrdatenpunkte relativ zu den initialen Fahrdatenpunkten. Dadurch erfolgt ein Clustering auf Basis eines erweiterten, das heißt sukzessive erweiterten, Fahrdatenpunktesamples. Aufgrund der neuen Datenbasis können sich demnach von Iteration zu Iteration die Cluster verschieben beziehungsweise ändern.

In jeder Iteration erfolgt ferner das Ermitteln eines Zentrumspunkts für jeden Cluster. Auch diese Zentrumspunkte beziehungsweise Zentroiden können sich von Iteration zu Iteration verschieben beziehungsweise anpassen durch die sukzessiv erweiterte Fahrdatenmenge.

In jeder Iteration findet ferner auch ein Erfassen von mindestens einem zusätzlichen Fahrdatenpunkt statt, wie bereits zuvor beschrieben. In jedem Iterationsschritt findet demnach wieder ein Zuordnen des mindestens einen Fahrdatenpunktes zu einem Cluster statt und das Evaluieren des Zentroidabstands. In jeder Iteration erfolgt somit ein Erweitern des Trainingsdatensatzes des vorherigen Iterationsschritts mit dem mindestens einen erfassten Fahrdatenpunkt, wenn der Abstand des mindestens einen erfassten Fahrdatenpunkts von dem Zentrumspunkt des zugeordneten Clusters größer als ein Abstandsschwellenwert ist.

Die einzelnen Schritte erfolgen hierbei in gleicher Weise wie bereits im Zuge des ersten Verfahrensdurchlaufs beschrieben. Auch die bevorzugten Ausführungsvarianten können in jedem Iterationsschritt, das heißt in jeder Iteration, angewendet werden. Der Unterschied besteht somit stets darin, dass für jede Iteration ein gegenüber der vorherigen Iteration erweiterter Fahrdatenpunktesatz für das Clustern verwendet wird.

Durch diese sukzessive Weiterentwicklung des Trainingsdatensatzes mit gemäß dem Abstandskriterium selektierten Fahrdaten, können somit sukzessive Fahrszenarien ergänzt werden, welche in dem initialen Fahrdatensatz nicht enthalten waren. Das Erweitern erfolgt dabei nach einem gezielten Abstandskriterium. Dadurch wird garantiert, dass alle Fahrzustände berücksichtigt werden und mit Hilfe des Clustering in einen homogenen Trainingsdatensatz überführt werden. Durch dieses gezielte Erweitern des Trainingsdatensatzes kann auch die Parameterschätzung sukzessive verbessert werden. Dies wird anschaulich in den Figuren 7, 8a und 8b gezeigt. Grundsätzlich kann das iterative Erweitern beliebig lange fortgesetzt werden.

Die in dem Schritt S140 zusätzlich erfassten Fahrdatenpunkte A1, A2 sind bevorzugt Fahrdatenpunkte des Fahrzeugs 105A, welche während des Fahrbetriebs erfasst beziehungsweise erhalten werden. Dies hat insbesondere den Vorteil, dass der Fahrzeugtyp und der Fahrzeugzustand in diesen Fahrdaten enthalten ist. Die Erweiterung des Trainingsdatensatzes kann somit mit besonders relevanten Fahrdaten erfolgen. Die Fahrdaten können dabei zeitkontinuierlich, das heißt permanent, während des Fahrzeugbetriebs erfolgen. Alternativ kann das Erfassen an bestimmten, vorgegebenen Zeitpunkten erfolgen.

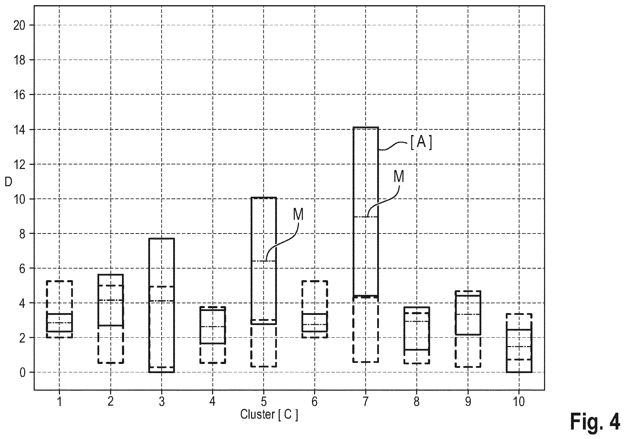

In der Figur 4 werden anhand von einem Balkendiagramm die Abstände von zusätzlichen Fahrdatenpunkten und den initialen Fahrdatenpunkten zu den Zentrumspunkten clusteraufgelöst dargestellt. Hierbei entsprechen die Nullpunkte, das heißt den Zentrumspunkten für jeden Cluster. In diesem Beispiel sind beispielhaft zehn Cluster vorgesehen. Die gestrichelten Boxen, beziehungsweise Kästen, zeigen dabei die Abstände der initialen Fahrdatenpunkte zum Zentrumspunkt. Mittelwerte M sind illustrativ mitangegeben. Die Boxen mit durchgezogenen Linien zeigen die Abstände der zusätzlichen Fahrdatenpunkte.

Das Diagramm illustriert hierbei, dass die zusätzlichen Fahrdatenpunkte mit den initialen Fahrdatenpunkten der Cluster 1, 2, 4, 6, 9 und 10 eine hohe Übereinstimmung haben. Für diese beispielhaften Cluster stellen die zusätzlichen Fahrdatenpunkte demnach einen nur geringen Mehrwert dar, da diese Fahrzustände durch die initialen Fahrdatenpunkte bereits hinreichend beschrieben sind.

Für die Cluster 3, 5 und 7 weisen die zusätzlichen Fahrdatenpunkte einen hohen Abstand auf und weichen von der Verteilung der initialen Fahrdatenpunkte im gleichen Cluster ab. Die zusätzlichen Fahrdatenpunkte stellen somit eine erhebliche Weitung des Raumes dar. Diese zusätzlichen Fahrdatenpunkte können somit zur Erweiterung des Trainingsdatensatzes dienen.

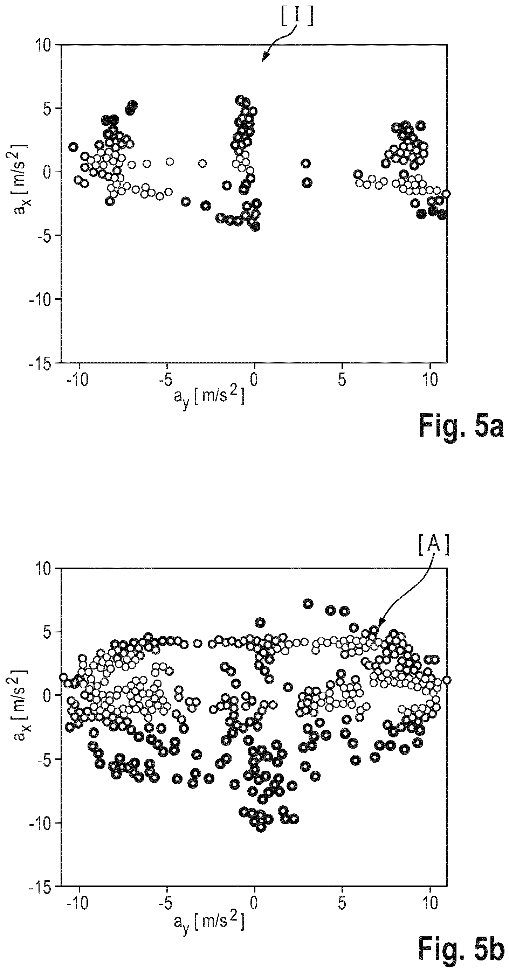

In den Figuren 5a und 5b wird eine beispielhafte Verteilung von initialen Fahrdatenpunkten, Figur 5a, gegen eine Verteilung von zusätzlichen Fahrdatenpunkten, Figur 5b, gezeigt. Dabei werden beispielhaft eine Longitudinalbeschleunigung, hier mit aₓ bezeichnet, und eine Lateralbeschleunigung, hier mit a_{y} bezeichnet, als beispielhafte Zustandsgrößen gezeigt. Die Fahrdaten der initialen Fahrdatenpunkte sind dabei im Wesentlichen in drei Bereiche unterteilt. Die Dichte der Fahrdatenpunkte ist dabei grob im Bereich von aₓ=0 konzentriert, das heißt, dass Brems- und Beschleunigungsvorgänge eher unterrepräsentiert sind. Im Gegensatz dazu weisen die zusätzlichen Fahrdatenpunkte hohe Brems- und Beschleunigungsvorgänge auf.

In der Figur 6 ist eine Visualisierung der Abstandsevaluierung der zusätzlichen Fahrdatenpunkte gegenüber den initialen Fahrdatenpunkten gezeigt. Die markierten Bereiche zeigen Fahrdatenpunkte mit hohen Abständen D zu den Zentroiden der zugeordneten Cluster. Solche Fahrdatenpunkte können daher als corner cases oder white spots identifiziert werden. Falls der Abstandsschwellwert erreicht wird, können solche Fahrdatenpunkte gemäß S180 entsprechend dem Trainingsdatensatz hinzugefügt werden.

In den Figuren 7, 8a und und 8b werden bevorzugte Beispiele von geschätzten Fahrzeugparametern zum Betrieb eines Fahrzeugs gezeigt. In diesem Fall werden Reifenparameter geschätzt, welche den Reifenzustand eines Fahrzeugs charakterisieren. Insbesondere sind die Reifenparameter des Kraftübertragungsverhaltens in Querrichtung gezeigt, das heißt die lateralen Kräfte F_{Lat} beziehungsweise Seitenkräfte. Diese werden gegen einen Schräglaufwinkel α dargestellt. Reifenparameter sind hierbei Formfaktoren, welche einen Reifenzustand kennzeichnen. Die Formfaktoren können hierbei Steigung, Maximalwert und/oder Abknickverhalten sein.

In der Figur 7 werden Parameterschätzungen für die Querkraft als Funktion des Schräglaufwinkels gemäß dem Stand der Technik ohne Nachbesserung beziehungsweise Erweiterung des Trainingsdatensatzes gezeigt. Die durchgezogene Linie stellt dabei geschätzte Lösungen dar. Dabei liegen jedoch im initialen Datensatz sogenannte white spots und Randbereiche vor, welche durch Kästen angezeigt werden. Diese verringern die Genauigkeit der Parameterschätzung.

In den Figuren 8a und 8b sind Parameterschätzungen für die Querkraft als Funktion des Schräglaufwinkels mit erweiterten Trainingsdatensätzen gemäß der Erfindung gezeigt. Hier ist erkennbar, dass in den fehlenden zuvor enthaltenen white spots entsprechende Fahrdatenpunkte vorliegen. Diese Fahrdatenpunkte sind gezielt durch das oben beschriebene Verfahren aufgezeichnet und zur Parameterschätzung zur Verfügung gestellt. Die Figur 8a zeigt dabei die Parameterschätzung nach einer erfolgten Iteration. Die Figur 8b zeigt eine Parameterschätzung nach einer zweiten Iteration. Es zeigt sich im Vergleich zur Figur 7 eine deutlich robustere Schätzung. Ferner zeigt sich, dass die zweifach iterierte Lösung noch robuster ist. Durch die Iteration kann somit nochmals an Präzision und Robustheit gewonnen werden.

Das Verfahren kann dabei ausgeführt werden von einer Vorrichtung 100 mit einem Prozessor, welcher die Schritte des Verfahrens ausführt. Eine solche Vorrichtung 100 kann insbesondere in einem Kraftfahrzeug integriert sein und der geschätzte Parameter kann direkt zum Betrieb des Kraftfahrzeugs, zum Beispiel von einem fahrzeuginternen Fahrassistenzsystem, verwendet werden.

Die Erfindung hat den Vorteil, dass Fahrzeugparameter besser, das heißt schneller und präziser, geschätzt werden können. Dies wird dadurch erzielt, dass mittels des Abstands gezielt und cluster-basiert fehlende Fahrdatenpunkte dem Trainingsdatensatz hinzugefügt werden, so dass die Generalisierung verbessert wird. Durch die erzielte Homogenisierung können Fahrzeugparameter mit höherer Lösungsgüte und zudem mit schnellerer Konvergenz ermittelt werden. Die Erfindung ermöglicht ferner eine effiziente Erweiterung eines objektiv beschreibbaren, gleichverteilten homogenen Trainingsdatensatzes. Dieser Prozess erfolgt automatisch anhand vorgegebener Kriterien, zum Beispiel fahrdynamische Gleichverteilung, gleichverteilte Szenarien, et cetera. Die Erweiterung erfolgt mittels einer Bewertung erfasster Fahrdatenpunkte anhand des Abstands zu Zentrumspunkten der Cluster, die in Relation zu bestehenden Trainingsdaten gesetzt und bewertet werden. Dadurch werden tatsächlich relevante Fahrdatenpunkte in den Trainingsdatensatz aufgenommen. Das Verfahren ermöglicht es, Fahrdatenpunkte effizient zu verarbeiten und gleichzeitig wesentliche Fahrdatenpunkte zu identifizieren.

### Bezugszeichenliste

- I1, I2: initiale Fahrdatenpunkte
- A1, A2: zusätzliche Fahrdatenpunkte
- C1, C2: Cluster
- D1, D2: Abstand
- D₀: Abstandsschwellenwert
- Z1: Zentrumspunkt/Zentroid
- M: Mittelwert

- 100: Vorrichtung

- 105A: Fahrzeugdaten/Fahrdatenpunkte des Fahrzeugs
- 105B: Clouddaten / fahrzeugextern gespeicherte Fahrdatenpunkte

- S110: Erhalten initialer Fahrdatenpunkte
- S120: Clustern initialer Fahrdatenpunkte
- S130: Bestimmung Zentroide
- S140: Erfassen zusätzlicher Fahrdatenpunkte
- S150: Zuweisen zu Cluster
- S160: Evaluieren Abstand
- S170: Erweitern Trainingsdaten
- S175: Nutze Test/Validierungsdaten
- S180: Schätze Fahrzeugparameter
- S190: Betreibe Fahrzeug

## Patentansprüche

1. Computerimplementiertes Verfahren zum Schätzen eines Reifenparameters zum Betrieb eines Fahrzeugs, umfassend:
Erhalten (S110) einer Vielzahl initialer Fahrdatenpunkte (I1, I2), wobei die Fahrdatenpunkte fahrdynamische Größen zum Schätzen des Reifenparameters umfassen;
**gekennzeichnet durch**, Aufteilen (S120) der initialen Fahrdatenpunkte (I1, I2) in Cluster (C1, C2) unter Verwendung eines Cluster-Algorithmus derart, dass jeder Fahrdatenpunkt (I1, I2) einem Cluster (C1, C2) zugeordnet wird;
Ermitteln (S130) eines Zentrumspunkts (Z1) für jeden Cluster (C1);
Erfassen (S140) von mindestens einem zusätzlichen Fahrdatenpunkt (A1, A2) durch mindestens einen Sensor des Fahrzeugs während des Fahrzeugbetriebs;
Zuordnen (S150) des mindestens einen erfassten Fahrdatenpunktes (A1, A2) zu einem Cluster (C1);
Erweitern (S170) eines Trainingsdatensatzes, welcher die initialen Fahrdatenpunkte (I1, I2) umfasst, mit dem mindestens einen erfassten Fahrdatenpunkt (A1), wenn ein Abstand (D1) des mindestens einen erfassten Fahrdatenpunkts (A1) von dem Zentrumspunkt (Z) des zugeordneten Clusters (C1) größer als ein Abstandsschwellenwert (D₀) ist; und
Schätzen (S180) des Reifenparameters zum Betrieb des Fahrzeugs auf Basis des erweiterten Trainingsdatensatzes mittels eines Algorithmus zum maschinellen Lernen.

2. Verfahren nach Anspruch 1, **dadurch gekennzeichnet, dass** der Abstandsschwellenwert (D₀) abhängig vom jeweiligen Cluster (C1, C2) ist.

3. Verfahren nach einem der Ansprüche 1 bis 2, **gekennzeichnet durch** das Verwenden von dem mindestens einen zusätzlichen Fahrdatenpunkt (A2) als Test- und/oder Validierungsdaten, wenn der Abstand (D2) des mindestens einen Fahrdatenpunkts (A2) zum Zentrumspunkt (Z1) des zugeordneten Clusters (C1) kleiner als ein Abstandsschwellenwert (D₀) ist.

4. Verfahren nach einem der vorherigen Ansprüche 1 bis 3, **dadurch gekennzeichnet, dass** die initialen Fahrdatenpunkte (I1, I2) erfasste Fahrdatenpunkte des Fahrzeugs während des Fahrzeugbetriebs sind.

5. Verfahren nach einem der Ansprüche 1 bis 3, **gekennzeichnet dadurch, dass** die initialen Fahrdatenpunkte (I1, I2) fahrzeugextern gespeicherte Fahrdatenpunkte sind.

6. Verfahren nach einem der vorherigen Ansprüche 1 bis 5, **gekennzeichnet durch** das iterative Erweitern des Trainingsdatensatzes durch n-faches, n≥1, Wiederholen der Schritte:
Aufteilen der initialen Fahrdatenpunkte und der bis zur vorherigen Iteration hinzugefügten Fahrdatenpunkte in Cluster unter Verwendung des Cluster-Algorithmus;
Ermitteln eines Zentrumspunkts für jeden Cluster;
Erfassen von mindestens einem zusätzlichen Fahrdatenpunkt durch den mindestens einen Sensor des Fahrzeugs während des Fahrzeugbetriebs;
Zuordnen des mindestens einen Fahrdatenpunktes zu einem Cluster; und
Erweitern des Trainingsdatensatzes der vorherigen Iteration mit dem mindestens einen erfassten Fahrdatenpunkt, wenn der Abstand des mindestens einen erfassten Fahrdatenpunkts von dem Zentrumspunkt des zugeordneten Clusters größer als ein Abstandsschwellenwert ist.

7. Verfahren nach einem der Ansprüche 1 bis 6, **gekennzeichnet durch** das zeitkontinuierliche Erfassen des mindestens einen zusätzlichen Fahrdatenpunkts (A1, A2) während des Fahrzeugbetriebs.

8. Verfahren nach einem der Ansprüche 1 bis 7, **gekennzeichnet durch** das Verwenden des Reifenparameters als Eingangsparameter eines Fahrassistenzsystems für automatisches oder teilautomatisches Fahren zum Betrieb des Fahrzeugs.

9. Vorrichtung (100) zum Schätzen eines Reifenparameters zum Betrieb eines Fahrzeugs, umfassend eine Prozessoreinheit, welche eingerichtet ist, das Verfahren nach einem der Ansprüche 1 bis 8 auszuführen.

10. Fahrzeug, umfassend eine Vorrichtung (100) nach Anspruch 9.

## Claims

1. Computer-implemented method for estimating a tire parameter for operating a vehicle, comprising:
obtaining (S110) a plurality of initial driving data points (11, 12), the driving data points comprising driving dynamics variables for estimating the tire parameter;
**characterized by**
dividing (S120) the initial driving data points (11, 12) into clusters (C1, C2) by using a cluster algorithm such that each driving data point (11, 12) is assigned to a cluster (C1, C2);
determining (S130) a center point (Z1) for each cluster (C1);
recording (S140) at least one additional driving data point (A1, A2) by at least one sensor of the vehicle during vehicle operation;
assigning (S150) the at least one recorded driving data point (A1, A2) to a cluster (C1);
expanding (S170) a training data set comprising the initial driving data points (11, 12) by the at least one recorded driving data point (A1) if a distance (D1) of the at least one recorded driving data point (A1) from the center point (Z) of the assigned cluster (C1) is greater than a distance threshold value (D₀); and estimating (S180) the tire parameter for operating the vehicle on the basis of the expanded training data set by means of a machine learning algorithm.

2. Method according to claim 1, **characterized in that** the distance threshold value (D₀) is dependent on the relevant cluster (C1, C2).

3. Method according to any of claims 1 to 2, **characterized by** using the at least one additional driving data point (A2) as test and/or validation data if the distance (D2) of the at least one driving data point (A2) to the center point (Z1) of the assigned cluster (C1) is less than a distance threshold value (D₀).

4. Method according to any of the preceding claims 1 to 3,
**characterized in that** the initial driving data points (11, 12) are driving data points of the vehicle recorded during vehicle operation.

5. Method according to any of claims 1 to 3, **characterized in that** the initial driving data points (11, 12) are driving data points stored externally to the vehicle.

6. Method according to any of the preceding claims 1 to 5, **characterized by** the iterative expansion of the training data set by n-fold, n ≥1, repetition of the steps:
dividing the initial driving data points and the driving data points added up to the previous iteration into clusters by using the cluster algorithm; determining a center point for each cluster;
recording at least one additional driving data point by the at least one sensor of the vehicle during vehicle operation;
assigning the at least one driving data point to a cluster; and
expanding the training data set of the previous iteration by the at least one recorded driving data point if the distance of the at least one recorded driving data point from the center point of the assigned cluster is greater than a distance threshold value.

7. Method according to any of claims 1 to 6, **characterized by** continuously recording the at least one additional driving data point (A1, A2) during vehicle operation.

8. Method according to any of claims 1 to 7, **characterized by** using the tire parameter as an input parameter of a driving assistance system, for automatic or semi-automatic driving, for operating the vehicle.

9. Device (100) for estimating a tire parameter for operating a vehicle, comprising a processing unit which is configured to execute the method according to any of claims 1 to 8.

10. Vehicle comprising a device (100) according to claim 9.

## Revendications

1. Procédé mis en œuvre par ordinateur permettant d'évaluer un paramètre de pneu pour le fonctionnement d'un véhicule, comprenant :
l'obtention (S110) d'une pluralité de points de données de conduite initiaux (11, 12), dans lequel les points de données de conduite comprennent des quantités de dynamique de conduite permettant d'évaluer le paramètre de pneu ;
**caractérisé par**
la division (S120) des points de données de conduite initiaux (11, 12) en grappes (C1, C2) à l'aide d'un algorithme de grappe de telle sorte que chaque point de données de conduite (11, 12) est attribué à une grappe (C1, C2) ;
la détermination (S130) d'un point central (Z1) pour chaque grappe (C1) ;
la détection (S140) d'au moins un point de données de conduite supplémentaire (A1, A2) par au moins un capteur du véhicule pendant le fonctionnement du véhicule ;
l'attribution (S150) de l'au moins un point de données de conduite (A1, A2) détecté à une grappe (C1) ;
l'extension (S170) d'un jeu de données d'entraînement, lequel comprend les points de données de conduite initiaux (11, 12) avec l'au moins un point de données de conduite (A1) détecté lorsqu'une distance (D1) de l'au moins un point de données de conduite (A1) détecté par rapport au point central (Z) de la grappe (C1) attribuée est supérieure à une valeur seuil de distance (D₀) ; et l'évaluation (S180) du paramètre de pneu pour le fonctionnement du véhicule sur la base du jeu de données d'entraînement étendu au moyen d'un algorithme pour l'apprentissage automatique.

2. Procédé selon la revendication 1, **caractérisé en ce que** la valeur seuil de distance (D₀) dépend de la grappe (C1, C2) respective.

3. Procédé selon l'une des revendications 1 à 2, **caractérisé par** l'utilisation de l'au moins un point de données de conduite supplémentaire (A2) en tant que données de test et/ou de validation lorsque la distance (D2) de l'au moins un point de données de conduite (A2) par rapport au point central (Z1) de la grappe (C1) attribuée est inférieure à une valeur seuil de distance (D₀).

4. Procédé selon l'une des revendications précédentes 1 à 3,
**caractérisé en ce que** les points de données de conduite initiaux (11, 12) sont des points de données de conduite du véhicule détectés pendant le fonctionnement du véhicule.

5. Procédé selon l'une des revendications 1 à 3, **caractérisé en ce que** les points de données de conduite initiaux (11, 12) sont des points de données de conduite stockés à l'extérieur du véhicule.

6. Procédé selon l'une des revendications précédentes 1 à 5,
**caractérisé par** l'extension itérative du jeu de données d'entraînement en répétant n fois, n ≥1, les étapes consistant à :
diviser les points de données de conduite initiaux et les points de données de conduite ajoutés jusqu'à l'itération précédente en grappes à l'aide de l'algorithme de grappe ; déterminer un point central pour chaque grappe ;
détecter au moins un point de données de conduite supplémentaire par l'au moins un capteur du véhicule pendant le fonctionnement du véhicule ;
d'attribution de l'au moins un point de données de conduite à une grappe ; et
étendre le jeu de données d'entraînement de l'itération précédente avec l'au moins un point de données de conduite détecté si la distance de l'au moins un point de données de conduite détecté par rapport au point central de la grappe attribuée est supérieure à une valeur seuil de distance.

7. Procédé selon l'une des revendications 1 à 6, **caractérisé par** la détection en continu dans le temps de l'au moins un point de données de conduite supplémentaire (A1, A2) pendant le fonctionnement du véhicule.

8. Procédé selon l'une des revendications 1 à 7, **caractérisé par** l'utilisation du paramètre de pneu comme paramètre d'entrée d'un système d'assistance à la conduite pour la conduite automatique ou semi-automatique pour le fonctionnement du véhicule.

9. Dispositif (100) permettant d'évaluer un paramètre de pneu pour le fonctionnement d'un véhicule, comprenant une unité de processeur conçue pour mettre en œuvre le procédé selon l'une des revendications 1 à 8.

10. Véhicule, comprenant un dispositif (100) selon la revendication 9.
